# EUROPEAN PATENT SPECIFICATION

(11) **EP 2 187 173 B1**
(45) Date of publication and mention of the grant of the patent: **04.10.2017**
(21) Application number: 08169111.5
(22) Date of filing: 14.11.2008
(51) Int. Cl.: G01D 4/00, G06F 12/12

(54) **Consumption meter with one processor handling legal and non-legal code**
Verbrauchsanzeiger mit einem Prozessor, der rechtmäßigen und nicht rechtmäßigen Code verarbeitet
Compteur de consommation doté d'un processeur pour traiter le code légal et le code non légal

(43) Date of publication of application: 19.05.2010
(73) Proprietor: KAMSTRUP A/S, 8660 Skanderborg (DK)
(72) Inventor: Raundahl, Kenneth Heine, 8660 Skanderborg (DK)
(74) Representative: Plougmann Vingtoft a/s

(56) References cited:
- US-A- 4 701 698
- US-A- 5 559 992
- US-A- 5 767 790
- US-A1- 2002 194 527
- US-B1- 7 068 545
- S. BAKHKHAT: "Embedded systems safety using a Memory Protection Unit" EMBEDDED CONTROL EUROPE, September 2008 (2008-09), XP002535136 http://www.embedded-control-europe.com/c_e ce_knowhow/261/ecesep08p24.pdf
- AKRAM KHAN ET AL: "Efficient Memory-Protected Integration of Add-On Software Subsystems in Small Embedded Automotive Applications" IEEE TRANSACTIONS ON INDUSTRIAL INFORMATICS, IEEE SERVICE CENTER, NEW YORK, NY, US, vol. 3, no. 1, 1 February 2007 (2007-02-01), pages 44-50, XP011163785 ISSN: 1551-3203

## Description

### Field of the invention

The invention relates to the field of consumption meters, such as electric meters, heat meters, cooling meters, water meters, and gas meters. Especially, the invention defines a consumption meter which can handle legal and non-legal software by means of a single processor.

### Background of the invention

Consumption meters for charging purposes are subjected to strong legal requirements regarding their function, to ensure that the basic meter function works in a well-defined manner. A consumption meter must be approved by the authorities in order to be legally cleared for charging purposes. Modern consumption meters have all of or at least most of their functions determined by software. This software includes code with algorithms defining the basic meter calculation algorithms, i.e. a legal software part, as well as procedures defining other less crucial functionalities of the meter not influencing the accuracy of the meter calculations, i.e. a non-legal software part. Often, it is desirable to change functionalities by means of an updated software of an already approved consumption meter. Such change requires that the meter is approved once again by the authorities, even though since the updated software does not involve any changes of the basic meter calculation algorithm. This is problematic, since it is difficult, expensive, and time consuming to provide consumption meters with specific costumer designed functionalities, even though such functionalities are merely in the form of updated software without any effect on the meter accuracy.

One way to solve the above problem is to produce a consumption meter with two separate processors each running their own separate software stored in separate memories. One processor can then run the legal software and thus execute the basic meter calculation algorithms determining the accuracy of the meter. The other processor can then run non-legal software determining auxiliary functionalities not affecting the vital meter function. Hereby, it is possible to change only the non-legal software, when changes in these functions are desired, and this will not require a new approval of the meter, since the legal software and its processing remains unchanged. However, this solution is expensive in manufacturing and two processors require significant more power than one which is a crucial parameter in battery powered meters. US2002/0194527 discloses a method for updating the software in a consumption meter using separate storage areas for the old and new operation program.

### Summary of the invention

Thus, according to the above explanation, it is an object of the present invention to provide a consumption meter which can handle legal and non-legal software with a single processor and at the same time provide enough separation of the execution of legal and non-legal tasks, such that it is possible to change non-legal software without requiring a new approval from the authorities.

According to a first aspect, the invention provides a consumption meter arranged to measure a consumed quantity of a physical entity, the meter including
- a measurement circuit arranged to perform a physical measurement on the physical entity and to generate data according thereto,
- a memory,
- a memory management unit arranged to handle access to areas of the memory according to respective access rights assigned to different tasks stored as executable code in the memory, and
- a processor arranged to access the memory through the memory management unit, and to execute executable code stored in the memory, the processor (P) being arranged
   - to execute a calculation task code with a first access right assigned thereto, wherein the calculation task includes receiving data from the measurement circuit, to accordingly calculate data representing the consumed quantity, and to store the data representing the consumed quantity in a first memory area, and
   - to execute an operating system code arranged to temporally limit execution of executable code other than the calculation task code.

By 'access right' is understood definition of rights related to protection of memory regions. The protection is implemented with rules that are based on the type of transaction (read, write or execute) and the right for an executable code to perform the transaction in a specific memory area. Different execution threads can have different access rights that grant access to resources such as memory regions, I/O ports, and other peripherals. Preferably, the respective access rights assigned to different tasks stored as executable code in the memory includes definition of access of the tasks to: read, write, and execute code. Access rights may be assigned to the different tasks in the form of different privilege levels defining a set of access rights.

By assigning different access rights to different tasks, it is possible to ensure that the crucial meter calculation task and its associated data are not affected by tasks which are not supposed to be involved in the calculation task. Further, by the operating system serving to limit the time available for execution of task code other than the crucial calculation task, it can be ensured that the processor will have sufficient processing time to perform the calculation task, and thus maintain the crucial meter function, even though e.g. an error occurs in another task causing the processor to be trapped in an infinite loop. Altogether, since both memory space and temporal execution are controlled in the consumption meter, it is possible to ensure that the processing of non-legal software does not affect processing of legal software, even though all software is processed by one single processor. Hereby, non-legal software can be changed without affecting the execution of the legal software parts, and thus such meter has the potential that non-legal software can be changed without requiring a renewed authority approval. According to the invention, the processor is arranged to perform at least one additional task with a second access right assigned thereto, such as a task of communicating the data representing the consumed quantity, wherein the at least one additional task is arranged to store data in a second memory area, wherein the second access right is more restricted than the first access right. Hereby, it is possible to ensure that the additional task has a limited memory access compared to the crucial calculation task. Especially, the second access right may include assigning of read-only access for the additional task to the first memory area. Hereby, it will be possible for the additional task to read the consumed quantity value stored by the calculation task in the first memory area, but it will not be allowed for the additional task to write in the first memory area, and thus it is not possible for the additional task to destroy the quantity value stored by the calculation task.

The Operating System is arranged to assign respective priority levels to all different tasks defined in the meter, and wherein the Operating System (OS) is arranged to allocate processor time to the different tasks according to their priority levels. Thus, the Operating System can allocate processor time in a prioritized way, such that a task with a high priority level is executed before a task with a lower priority level in case both tasks request processor time simultaneously. Especially, legal tasks may be assigned higher priority levels than non-legal tasks, so as to ensure proper operation of the legal tasks. Further, the Operating System may be arranged to pre-empt non-legal tasks, so as to ensure proper operation of the legal tasks.

In preferred embodiments, a legal task has access rights assigned thereto which is less restrictive than access rights assigned to a non-legal task. Especially, non-legal tasks may have read-only access to all memory areas used by legal tasks. Such memory access right assignment allows security against non-legal overwriting memory areas used by legal tasks, and thus it becomes possible to eliminate memory conflicts between legal and non-legal software.

The operating system may have access to a memory area to which all other tasks have been assigned a read-only access, thereby serving special protection of a dedicated area of the memory for use by the operating system, thereby ensuring that no other tasks can destroy data used by the operating system.

Executable code associated with a task of handling download of executable code into the consumption meter may be stored in a memory area to which all other tasks have been assigned a non-accessible access. Of course the Operating System can initiate execution of such downloading task, but assignment of non-access for other tasks ensures that the code controlling handling of software download is not destroyed by other tasks.

Preferably, the operating system is arranged to limit tasks other than the calculation task by allocating processor time to all tasks defined in the meter.

Especially, the operating system may be arranged to allocate processor time to legal tasks according to a predefined timing scheme, so as to ensure proper operation of the legal tasks. The operating system is preferably arranged to pre-empt or stop execution of non-legal tasks in order to allocate processor time to the legal tasks according to the predefined timing scheme. Thus, a task that would otherwise cause the processor to run in an infinite loop will be stopped by the operating system.

The memory management unit is arranged to detect a task attempting to access a memory area to which it does not have access right, and to inform the Operating System accordingly. Thus, the Operating System can then be designed to act accordingly, e.g. by pre-empting or stopping the task attempting to access the memory area to which it does not have access, and/or logging the event in an error log, and/or transmit an error alarm from the consumption meter etc.

The memory may in general be one single physical component or distributed between a plurality of separate memory chips. The processor may be a suitable processor for a consumption meter, such as known by the person skilled in the art. The memory management unit can be implemented by use of knowledge by persons skilled within data processing, and commercially available products exist for connection between the processor and memory. For further reference, WO 2006/072756 A1 describes a data processing apparatus with a memory protection unit. Further, the thesis "Memory Protection in a Real-Time Operating System" by R.P. Anderson and P. Scarin, Department of Automatic Control, Lund Institute of Technology, November 2004, describes related information.

The consumption meter may be one of: an electricity meter, a heat meter, a cooling meter, a flow meter, a water meter, and a gas meter.

### Brief description of drawings

In the following, the invention will be described in more details by referring to embodiments illustrated in the accompanying drawings, of which
Fig. 1 illustrates a consumption meter embodiment, and
Fig. 2 illustrates an example of a memory map with data and executable code address spaces and privilege levels assigned to different tasks.

### Detailed description of the invention

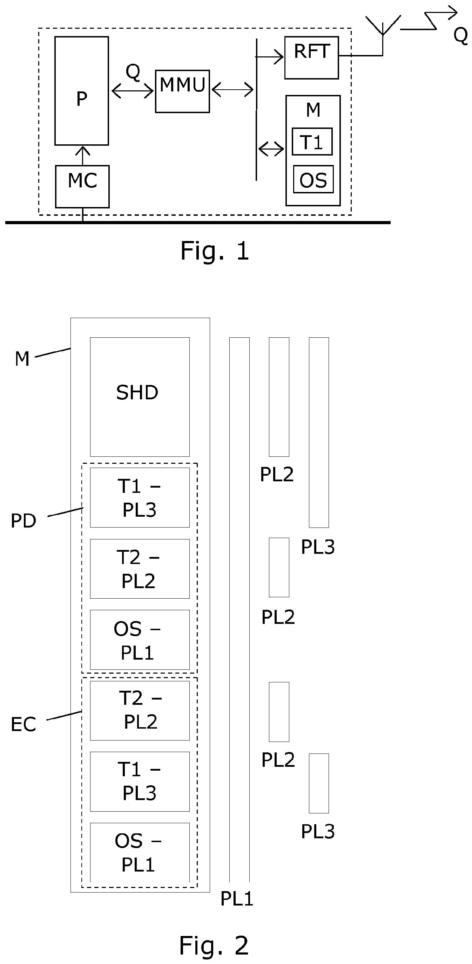

Fig. 1 illustrates a consumption meter (indicated with the dashed line) with a measurement circuit MC connected to sense a consumed amount of a physical entity, e.g. electric energy supplied by an electric power line. Measurement data from the measurement circuit MC is applied to a processor P which performs a calculation task T1 on these data, i.e. the processor P executes program code representing a calculation algorithm. The executable code associated with the calculation task T1 is stored in a memory M, as well as executable code representing an operating system OS. Further, other areas of the memory M is used by the calculation task T1 to store intermediate calculation data. The resulting calculated consumed quantity Q is preferably stored in a memory location where only the calculation task T1 has access to write thus protecting the resulting data Q from violation from other tasks. Certain tasks may need to have access to read the consumed quantity data Q memory location, e.g. tasks serving to display the consumed quantity value Q on a display, or tasks serving to apply the consumed quantity value Q to a wireless RF transmitter RFT capable of transmitting an RF signal with the consumed quantity value Q represented therein.

As seen in Fig. 1, the processor P accesses the memory M through a memory management unit MMU, e.g. implemented as a separate chip connected between the processor P chip and one or more memory M chips. The memory management unit MMU serves to manage all memory access, i.e. read execute code and read/write data. The memory management unit MMU can be set up such that different tasks T1, OS have assigned certain access rights, e.g. in the form of privilege levels defining a set of access rights for each task. One privilege level includes a set of memory access rights, i.e. specific memory areas where the task has defined one or more of read/write/execute access rights. Thus, when the processor P executes one line of executable code of a task requesting right to write data in a specific location in memory M, the memory management unit MMU checks if the task has write access right to the location in memory M. If not, the memory management unit MMU informs the operating system OS that can act accordingly, e.g. stop further execution of the task. In essence, the memory management unit MMU serves to protect specific memory M areas. Thereby, the memory management unit MMU can effectively separate possible influence by a non-legal task on data or executable code belonging to a legal task. Specific examples of assigning of privilege levels and access rights to certain address areas of the memory M will be given in the following.

Apart from ensuring that legal tasks are protected from memory M violation from non-legal tasks, proper execution of the vital meter tasks, e.g. the calculation task T1, and the operating system OS, it must be ensured that a non-legal task does not temporally occupy the processor P, such that the vital legal tasks T1, OS can not be executed properly by the processor P. This is handled by the operating system OS which is capable of temporally limiting execution of a task. E.g. the operating system OS may include a timing scheme for all task defined in the meter, e.g. time slots assigned for each tasks. In such timing scheme it can then be ensured that proper time is reserved for execution of the vital tasks T1, OS.

The operating system OS is then preferably designed to temporally limit a task by stopping execution of the task, if the task exceeds the time reserved for the task in the timing scheme. This protects against a task accidentally running into an infinite loop which would cause the processor P to cease handling the vital calculation task T1, thereby causing mal-function of the meter.

Fig. 2 illustrates an example of a memory M map for a consumption meter with, for simplicity, only three tasks: an additional or auxiliary non-legal task T1, a vital meter calculation task T2 (i.e. a legal task), and an operating system (i.e. also a legal task). The memory M is split into areas: a shared data area SHD which can be accessed by all tasks T1, T2, OS, a private data area PD for data used by each single task T1, T2, OS, and an executable code area EC with executable code for each single task T1, T2, OS.

To the right in Fig. 2, different privilege levels PL1, PL2, PL3 assigned to the respective task OS, T2, T3 are illustrated with respect to their access rights to the different areas of the memory M. Bars are used to indicate the area of the memory M which the privilege level PL1, PL2, PL3 represents access right to. Thus, it is seen that the operating system OS with the highest privilege level PL1 is allowed full access right to all areas of the memory M. Further, all tasks T1, T2, OS have access right to the shared data memory area SHD irrespective of their privilege levels PL1, PL2, PL3. Apart from the shared data area SHD, task T2 with privilege level PL2 only has access right to its own private data and executable code memory areas. The same applies for task T1 which has privilege level PL3. Thus, with this memory access right assignment, it can be ensured that none of the tasks T1, T2 can destroy crucial data used by other tasks OS, T2, T1. Thus, a legal calculation task T2 will not be affected with respect to memory conflict by replacement of the executable code for task T1, provided that the same privilege level PL2 is assigned to the new executable code for task T1. Hereby, legal and non-legal code can be handled even sharing the same physical memory M without interference.

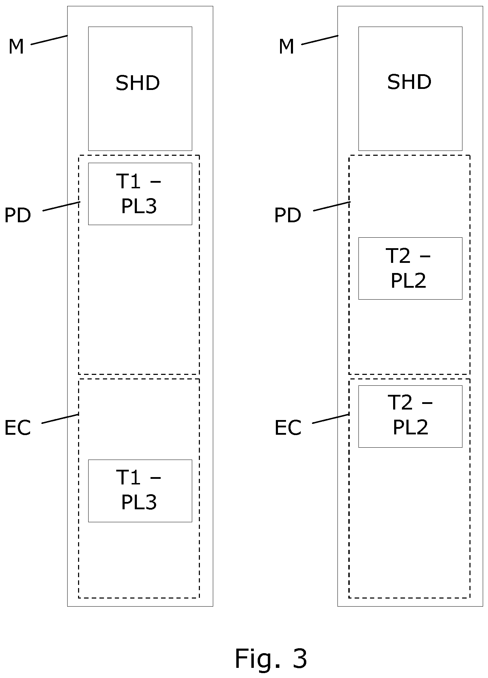

Fig. 3 illustrates the virtual memory map taking into account the access rights assigned to task T1 and task T2 following the example from Fig. 2. The sketch to the left illustrates the memory M as "seen" from task T1, whereas the sketch to the right illustrates the memory M as "seen" from task T2. Apart from the shared data area SHD, the tasks will not operate at overlapping memory addresses, and thus these tasks T1, T2 can operate safely without memory conflicts even though they both access the same physical memory M chip. The memory management unit MMU as shown in Fig. 1 serves to check that the assignment rights associated with the respective privilege levels PL1, PL2, PL3 are obeyed. The memory management unit MMU will inform the operating system OS, in case not.

To sum up, the invention provides a consumption meter, e.g. for charging purposes, arranged to measure a consumed quantity Q of a physical entity. The meter has a measurement circuit MC, a memory M, a memory management unit MMU for handling access to areas of the memory M according to respective access rights assigned to different tasks, and a processor P. The processor P can access the memory M through the memory management unit MMU, and execute executable code T1, OS stored in the memory M. The processor P can execute a vital meter calculation task T1 with a first access right PL3 assigned thereto which results in storing a calculated consumed quantity Q in a first memory area. Finally, the processor P can execute an operating system OS which can temporally limit execution of executable code other than the calculation task code T1. This architecture of a consumption meter allows one single processor P to be used for handling legal and non-legal tasks, and the memory management unit MMU serves to ensure that no data used by a legal task can be destroyed by a non-legal task. Further, since the operating system OS can handle possible temporal conflicts between non-legal and legal tasks, it will be possible to change executable program code for non-legal tasks without the requirement of a renewed authority approval of the meter.

Although the present invention has been described in connection with the specified embodiments, it is not intended to be limited to the specific form set forth herein. Rather, the scope of the present invention is limited only by the accompanying claims.

## Claims

1. A consumption meter arranged to measure a consumed quantity (Q) of a physical entity, the meter including
- a measurement circuit (MC) arranged to perform a physical measurement of the physical entity and to generate measurement data associated therewith,
- a memory (M),
- a memory management unit (MMU) is arranged to handle access to areas of the memory (M) according to access rights assigned to different tasks stored as executable code in the memory (M), and
- a single processor (P) arranged to access the memory (M) through the memory management unit (MMU), to execute an operating system (OS) stored in the memory (M), and to execute the executable code assigned to the different tasks,
wherein the consumption meter is arranged to execute
- legal software for performing legal calculation tasks on the measurement data, the legal calculation tasks having assigned first access rights and a priority level,
- non-legal software for performing non-legal calculation tasks calculation tasks on the measurement data, the non-legal calculation tasks having assigned second access rights and a priority level, the non-legal software being replaceable without replacing the legal software,
the processor (P) being arranged
- to execute a legal calculation task (T1), wherein the calculation task includes receiving data from the measurement circuit (MC), to accordingly calculate data representing the consumed quantity (Q), and to store the data representing the consumed quantity (Q) in a first memory area, and
- to execute at least one non-legal calculation task, the at least one additional task (T2) is arranged to store data in a second memory area,
wherein the memory management unit is arranged to detect if the non-legal task attempts to store data a memory area with first access rights and instruct the operating system to stop the non-legal calculation task attempting to store data the a memory area with first access rights,
the processor (P) further being arranged
- to execute an operating system code (OS) arranged to temporally limit execution of non-legal calculation tasks, and wherein the Operating System (OS) is arranged to allocate processor time to the different tasks according to their priority levels, so that a legal task is executed before a non-legal task.

2. Consumption meter according to claim 1, wherein the second access right (PL2) includes assigning of a read-only access for the non-legal task (T2) to the first memory area.

3. Consumption meter according to claim 1 or 2, wherein the Operating System (OS) is arranged to pre-empt non-legal tasks, so as to ensure proper operation of the legal tasks.

4. Consumption meter according to any of the preceding claims, wherein the respective access rights assigned to different tasks stored as executable code in the memory (M) includes definition of access of the tasks to: read, write, and execute code.

5. Consumption meter according to any of the preceding claims, wherein access rights are assigned to the different tasks in the form of different privilege levels defining a set of access rights.

6. Consumption meter according to any of the preceding claims, wherein the operating system (OS) has access to a memory area to which all other tasks have assigned a read-only access.

7. Consumption meter according to any of the preceding claims, wherein executable code associated with a task of handling download of executable code into the consumption meter is stored in a memory area to which all other tasks have assigned a non-accessible access, so as to ensure that only the Operating System (OS) can initiate execution of the task of handling download of executable code into the consumption meter.

8. Consumption meter according to any of the preceding claims, wherein the memory management unit (MMU) is arranged to detect a task attempting to access a memory area to which it does not have access according to its access right, and to inform the operating system (OS) accordingly.

9. Consumption meter according to claim 8, wherein the operating system (OS) is arranged to pre-empt or stop execution of the task attempting to access the memory area to which it does not have access according to its access right.

10. Consumption meter according to any of the preceding claims, wherein the consumption meter is one of: an electricity meter, a heat meter, a cooling meter, a flow meter, a water meter, and a gas meter.

## Patentansprüche

1. Verbrauchsmesser, ausgelegt zum Messen einer verbrauchten Menge (Q) einer physikalischen Einheit, wobei der Messer Folgendes beinhaltet:
- eine Messschaltung (MC), ausgelegt zum Durchführen einer physikalischen Messung der physikalischen Einheit und zum Erzeugen von damit assoziierten Messdaten,
- einen Speicher (M),
- eine Speichermanagementeinheit (MMU), ausgelegt zum Handhaben von Zugriff auf Bereiche des Speichers (M) gemäß Zugriffsrechten, die verschiedenen Aufgaben, die als ausführbarer Code in dem Speicher (M) gespeichert sind, zugeordnet sind, und
- einen einzelnen Prozessor (P), ausgelegt zum Zugreifen auf den Speicher (M) über die Speichermanagementeinheit (MMU), um ein Betriebssystem (OS) auszuführen, das in dem Speicher (M) gespeichert ist, und um den ausführbaren Code, der den verschiedenen Aufgaben zugeordnet ist, auszuführen,
wobei der Verbrauchsmesser ausgelegt ist, um Folgendes auszuführen:
- rechtmäßige Software zum Durchführen von rechtmäßigen Berechnungsaufgaben zu den Messdaten, wobei den rechtmäßigen Berechnungsaufgaben erste Zugriffsrechte und eine Prioritätsstufe zugewiesen sind,
- nicht rechtmäßige Software zum Durchführen von nicht rechtmäßigen Berechnungsaufgaben zu den Messdaten, wobei den nicht rechtmäßigen Berechnungsaufgaben zweite Zugriffsrechte und eine Prioritätsstufe zugewiesen sind, wobei die nicht rechtmäßige Software austauschbar ist, ohne die rechtmäßige Software auszutauschen,
wobei der Prozessor (P) für Folgendes ausgelegt ist:
- zum Ausführen einer rechtmäßigen Berechnungsaufgabe (T1), wobei die Berechnungsaufgabe ein Empfangen von Daten von der Messschaltung (MC) beinhaltet, um entsprechend Daten zu berechnen, die die verbrauchte Menge (Q) repräsentieren, und um die Daten, die die verbrauchte Menge (Q) repräsentieren, in einem ersten Speicherbereich zu speichern, und
- zum Ausführen von zumindest einer nicht rechtmäßigen Berechnungsaufgabe, wobei die zumindest eine zusätzliche Aufgabe (T2) dazu ausgelegt ist, Daten in einem zweiten Speicherbereich zu speichern,
wobei die Speichermanagementeinheit dazu ausgelegt ist, zu erkennen, ob die nicht rechtmäßige Aufgabe versucht, Daten in einem Speicherbereich mit ersten Zugriffsrechten zu speichern, und das Betriebssystem anzuweisen, das nicht rechtmäßige Berechnungssystem beim Versuchen, Daten in einem Speicherbereich mit ersten Zugriffsrechten zu speichern, zu stoppen,
wobei der Prozessor (P) ferner für Folgendes ausgelegt ist:
- zum Ausführen eines Betriebssystemcodes (OS), der dazu ausgelegt ist, eine Ausführung von nicht rechtmäßigen Berechnungsaufgaben vorübergehend zu beschränken, wobei das Betriebssystem (OS) dazu ausgelegt ist, Prozessorzeit zu den verschiedenen Aufgaben gemäß deren Prioritätsstufen zuzuordnen, sodass eine rechtmäßige Aufgabe vor einer nicht rechtmäßigen Aufgabe durchgeführt wird.

2. Verbrauchsmesser nach Anspruch 1, wobei das zweite Zugriffsrecht (PL2) ein Zuweisen eines Nur-Lese-Zugriffs für die nicht rechtmäßige Aufgabe (T2) auf den ersten Speicherbereich beinhaltet.

3. Verbrauchsmesser nach Anspruch 1 oder 2, wobei das Betriebssystem (OS) dazu ausgelegt ist, nicht rechtmäßigen Aufgaben zuvorzukommen, um so eine ordnungsgemäße Durchführung der rechtmäßigen Aufgaben sicherzustellen.

4. Verbrauchsmesser nach einem der vorstehenden Ansprüche, wobei die entsprechenden Zugriffsrechte, die verschiedenen Aufgaben, die als ausführbarer Code in dem Speicher (M) gespeichert sind, zugeordnet sind, die folgende Definition von Zugriff auf die Aufgaben beinhalten: Lesen, Schreiben und Ausführen von Code.

5. Verbrauchsmesser nach einem der vorstehenden Ansprüche, wobei Zugriffsrechte den verschiedenen Aufgaben in der Form von verschiedenen Privilegstufen, die eine Reiche von Zugriffsrechten definieren, zugewiesen sind.

6. Verbrauchsmesser nach einem der vorstehenden Ansprüche, wobei das Betriebssystem (OS) Zugriff auf einen Speicherbereich hat, für den für alle anderen Aufgaben ein Nur-Lese-Zugriff zugewiesen ist.

7. Verbrauchsmesser nach einem der vorstehenden Ansprüche, wobei ausführbarer Code, der mit einer Aufgabe zum Handhaben eines Downloads von ausführbarem Code in den Verbrauchsmesser assoziiert ist, in einem Speicherbereich gespeichert wird, für den für alle anderen Aufgaben ein Nichtzugriff zugewiesen ist, um so sicherzustellen, dass nur das Betriebssystem (OS) eine Ausführung der Aufgabe der Handhabung eines Downloads von ausführbarem Code in den Verbrauchsmesser initiieren kann.

8. Verbrauchsmesser nach einem der vorstehenden Ansprüche, wobei die Speichermanagementeinheit (MMU) dazu ausgelegt ist, eine Aufgabe zu erkennen, die versucht, auf einen Speicherbereich zuzugreifen, auf den sie gemäß ihrer Zugriffsrechte keinen Zugriff hat, und das Betriebssystem (OS) entsprechend zu informieren.

9. Verbrauchsmesser nach Anspruch 8, wobei das Betriebssystem (OS) dazu ausgelegt ist, einer Ausführung der Aufgabe, die versucht, auf den Speicherbereich zuzugreifen, auf den Sie gemäß ihrer Zugriffsrechte keinen Zugriff hat, zuvorzukommen oder diese zu stoppen.

10. Verbrauchsmesser nach einem der vorstehenden Ansprüche, wobei der Verbrauchsmesser einer der Folgenden ist: ein Stromzähler, ein Wärmezähler, ein Kühlzähler, ein Durchflussmesser, ein Wasserzähler und ein Gaszähler.

## Revendications

1. Compteur de consommation agencé pour mesurer une quantité consommée (Q) d'une entité physique, ledit compteur comprenant :
- un circuit de mesure (MC) agencé pour effectuer une mesure physique de l'entité physique et pour générer des données de mesure associées à celle-ci,
- une mémoire (M),
- une unité de gestion de mémoire (MMU) agencée pour gérer l'accès à des zones de la mémoire (M) selon des droits d'accès attribués à différentes tâches stockées sous forme de code exécutable dans la mémoire (M), et
- un seul processeur (P) agencé pour accéder à la mémoire (M) par le biais de l'unité de gestion de mémoire (MMU), pour exécuter un système d'exploitation (OS) stocké dans la mémoire (M) et pour exécuter le code exécutable attribué aux différentes tâches,
ledit compteur de consommation étant agencé pour exécuter
- un logiciel juridique pour effectuer des tâches de calcul juridiques sur les données de mesure, les tâches de calcul juridiques possédant des premiers droits d'accès attribués et un niveau de priorité,
- un logiciel non juridique pour effectuer des tâches de calcul non juridiques sur les données de mesure, les tâches de calcul non juridiques possédant des seconds droits d'accès attribués et un niveau de priorité, le logiciel non juridique pouvant être remplacé sans remplacer le logiciel juridique,
le processeur (P) étant agencé
- pour exécuter une tâche de calcul juridique (T1), ladite tâche de calcul comprenant la réception de données provenant du circuit de mesure (MC), pour calculer en conséquence les données représentant la quantité consommée (Q) et pour stocker les données représentant la quantité consommée (Q) dans une première zone de mémoire, et
- pour exécuter au moins une tâche de calcul non juridique, l'au moins une tâche supplémentaire (T2) étant agencée pour stocker des données dans une seconde zone de mémoire,
ladite unité de gestion de mémoire étant agencée pour détecter si la tâche non juridique tente de stocker des données dans une zone de mémoire avec des premiers droits d'accès et pour ordonner au système d'exploitation d'arrêter la tâche de calcul non juridique tentant de stocker des données dans une zone de mémoire avec les premiers droits d'accès,
le processeur (P) étant agencé en outre
- pour exécuter un code de système d'exploitation (OS) agencé pour limiter temporellement l'exécution des tâches de calcul non juridiques, et ledit système d'exploitation (OS) étant agencé pour allouer du temps de processeur aux différentes tâches selon leurs niveaux de priorité afin qu'une tâche juridique soit exécutée avant une tâche non juridique.

2. Compteur de consommation selon la revendication 1, ledit second droit d'accès (PL2) comprenant l'attribution d'un accès en lecture seule pour la tâche non juridique (T2) à la première zone de mémoire.

3. Compteur de consommation selon la revendication 1 ou 2, ledit système d'exploitation (OS) étant agencé pour anticiper des tâches non juridiques de façon à assurer le bon fonctionnement des tâches juridiques.

4. Compteur de consommation selon l'une quelconque des revendications précédentes, lesdits droits d'accès respectifs attribués aux différentes tâches stockées sous forme de code exécutable dans la mémoire (M) comprenant la définition de l'accès des tâches pour : lire, écrire et exécuter du code.

5. Compteur de consommation selon l'une quelconque des revendications précédentes, lesdits droits d'accès étant attribués aux différentes tâches sous la forme de niveaux de privilège différents définissant un ensemble de droits d'accès.

6. Compteur de consommation selon l'une quelconque des revendications précédentes, ledit système d'exploitation (OS) pouvant accéder à une zone de mémoire à laquelle un accès en lecture seule a été attribué à toutes les autres tâches.

7. Compteur de consommation selon l'une quelconque des revendications précédentes, ledit code exécutable associé à une tâche de gestion de téléchargement de code exécutable dans le compteur de consommation étant stocké dans une zone de mémoire à laquelle une interdiction d'accès a été attribuée à toutes les autres tâches de façon à assurer que seul le système d'exploitation (OS) peut déclencher l'exécution de la tâche de gestion de téléchargement de code exécutable dans le compteur de consommation.

8. Compteur de consommation selon l'une quelconque des revendications précédentes, ladite unité de gestion de mémoire (MMU) étant agencée pour détecter une tâche tentant d'accéder à une zone de mémoire à laquelle elle ne peut accéder selon son droit d'accès et pour informer en conséquence le système d'exploitation (OS).

9. Compteur de consommation selon la revendication 8, ledit système d'exploitation (OS) étant agencé pour anticiper ou arrêter l'exécution de la tâche tentant d'accéder à la zone de mémoire à laquelle elle ne peut accéder selon son droit d'accès.

10. Compteur de consommation selon l'une quelconque des revendications précédentes, ledit compteur de consommation étant l'un des suivants : un compteur électrique, un compteur de chauffage, un compteur de refroidissement, un débitmètre, un compteur d'eau et un compteur de gaz.
